Europäisches Patentamt

European Patent Office

Office européen des brevets

(19)

(11) **EP 1 032 916 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(51) Int Cl.⁷: $G06K\ 9/00$

(21) Anmeldenummer: **99953644.4**

(22) Anmeldetag: **01.09.1999**

(86) Internationale Anmeldenummer:
**PCT/DE1999/002728**

(87) Internationale Veröffentlichungsnummer:
**WO 2000/019356 (06.04.2000 Gazette 2000/14)**

(54) **VERFAHREN ZUR AUTOMATISCHEN TRIGGERUNG VON MUSTERERKENNUNGSAUFGABEN**

METHOD FOR AUTOMATIC TRIGGERING OF PATTERN RECOGNITION TASKS

PROCEDE DE DECLENCHEMENT AUTOMATIQUE DE TACHES DE RECONNAISSANCE DE MOTIFS

(84) Benannte Vertragsstaaten:
**DE FR GB IT**

(30) Priorität: **30.09.1998 AT 162498**

(43) Veröffentlichungstag der Anmeldung:
**06.09.2000 Patentblatt 2000/36**

(73) Patentinhaber: **SIEMENS AKTIENGESELLSCHAFT**
**80333 München (DE)**

(72) Erfinder:
• **EGGER, Robert**
**A-8605 Kapfenberg (AT)**

• **HASELSTEINER, Ernst**
**A-8010 Graz (AT)**
• **HESCHGL, Kurt**
**A-8010 Graz (AT)**
• **HRIBERNIG, Gerd**
**A-8046 Graz (AT)**
• **MARIUS, Wolfgang**
**A-8043 Graz (AT)**
• **RAUNEGGER, Arno**
**A-8047 Graz (AT)**
• **WINDISCH, Claudia**
**A-8565 St. Johann (AT)**

(56) Entgegenhaltungen:
**EP-A- 0 640 933**      **DE-A- 19 731 296**

**Beschreibung**

Technisches Gebiet:

Die Erfindung betrifft ein Verfahren zur automatischen Triggerung einer Fingerabdruckserkennung.
Mustererkennungsaufgaben gewinnen zusehends an Bedeutung. Sie spielen eine Rolle in Zusammenhang mit industriellen Robotern bei hochautomatisierten Fertigungsaufgaben, aber insbesondere bei der maschinellen Identifizierung von Personen. Einsatzmöglichkeiten sind dabei unter anderem Zutrittskontrollen, Geldausgabeautomaten und Kommunikationsgeräte aller Art.

Stand der Technik:

Aus IEEE Spectrum, Februar 1994, "It had to be you" ist bekannt, dass für die Identifikation von Personen geeignete personenbezogene Merkmale beispielsweise das Muster der Blutbahnen der Netzhaut, die Struktur der Iris, die Länge und Form der Finger, das Gesicht, die Stimme oder aber Fingerabdrücke sind. Die wahrscheinlich am besten erforschten und damit zuverlässigsten Merkmale sind dabei die Fingerabdrücke. Diese sind auch in für den Benutzer komfortabler Weise zu ermitteln, während zum Beispiel das Muster der Netzhaut nur durch eine für den zu Identifizierenden unangenehme Prozedur erfasst werden kann und daher nur in jenen Fällen angewendet werden wird, in denen dieser Effekt keine Rolle spielt oder gegebenenfalls sogar erwünscht ist.
Ein Verfahren der eingangs genannten Art ist aus der EP 0 640 933 A bekannt geworden. Das bekannte Verfahren zeigt eine Triggerung einer Fingerabdruckerkennung aufgrund der Varianz des Grauwertbildes, wobei bei Auflage eines Fingers auf einen Fingerprintsensor so lange Bilder aufgenommen werden, bis die Grauwertvarianz einen vorgegebenen Schwellwert überschreitet. Wird der Schwellwert für die Grauwertvarianz überschritten, so wird eine Fingerabdruckerkennung ausgelöst.

Darstellung der Erfindung:

Andere Verfahren zur automatischen Durchführung des Vergleichs von Fingerabdrücken mit gespeicherten Mustern sind ebenfalls bekannt.
Diese Verfahren werden üblicherweise durch einen vom Benutzer auszulösenden Befehl gestartet (getriggert). Da dies in vielen Anwendungsfällen als nachteilig empfunden wird, liegt der Erfindung, die Aufgabe zugrunde, ein alternatives Verfahren zu dem aus der EP 0 640 933 A bekannten anzugeben, mit dem der Mustererkennungsvorgang selbsttätig ausgelöst (getriggert) wird.
Erfindungsgemäß wird diese Aufgabe gelöst mit einem Verfahren der eingangs genannten Art, bei dem periodisch wiederkehrend aus der vorliegenden Bildinformation ein Histogramm der Häufigkeitsverteilung der Grauwerte des Bildes ermittelt wird, bei dem die Charakteristika des Histogramms ermittelt werden und auf der Grundlage der Charakteristika festgestellt wird, ob ein relevantes Muster vorliegt und wenn dies der Fall ist, der Erkennungsvorgang angestoßen wird. Das Verfahren zeichnet sich durch geringen Aufwand und damit verbunden geringe Rechenzeit aus und liefert dabei zuverlässige Aussagen über die Art des vorliegenden Bildes. Die Identifizierung von Personen anhand von Fingerabdrücken stellt eines der erfolgversprechendsten Anwendungsgebiete der automatischen Mustererkennung dar. Gerade dabei spielt aber der Bedienkomfort eine große Rolle. Der Benutzer soll durch einfaches Auflegen eines Fingers auf einen Sensor ohne zusätzliche Bedienungshandlung den Identifikationsvorgang auslösen können. Dies wird mit der Erfindung erreicht, ohne dass teure und fehleranfällige mechanische Komponenten wie Drucktasten oder ähnliches verwendet werden müssen.
Vorteilhaft ist es auch, wenn als Charakteristika des Histogramms der arithmetische Mittelwert der Grauwerte (Ia), der minimale Grauwert (Imin), der maximale Grauwert (Imax), der Wert des unteren Maximums (Nmax1) und der Wert des oberen Maximums (Nmax2) herangezogen werden. Diese Werte beschreiben den typisch sattelförmigen Verlauf des Histogramms eines Fingerabdruckes ausreichend und sind auf einfache Weise zu ermitteln.

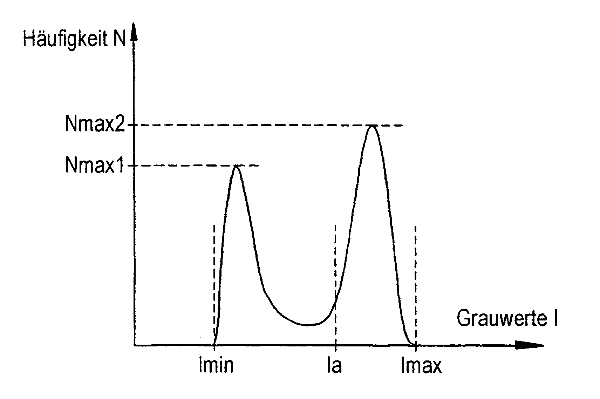

Beschreibung der Zeichnung:

Die Figur zeigt beispielhaft ein Histogramm der Grauwerte eines Fingerabdruckes.

Bester Weg zur Ausführung der Erfindung:

as in der Figur dargestellte Histogramm wurde entsprechend der folgenden Bildungsvorschrift erstellt:

$$y[i] = Ni,$$

wobei i die Menge der möglichen Grauwerte indiziert, bei einem 8 bit-Digitalwandler zum Beispiel 256 unterschiedliche Werte, und N angibt, wie oft der mit dem Index i bezeichnete Grauwert in dem Bild auftritt. In der Figur bildet der Index i die Werte der Abszisse und N die Werte der Ordinate. Es ist nun erkennbar, dass das dargestellte Histogramm eines Fingerabdruckes einen sattelförmigen Verlauf mit zwei ausgeprägten Maxima aufweist. Diese entsprechen den Grauwerten für die Papillarlinien bzw. den entsprechenden Zwischenräumen. Der Verlauf ist damit typisch für Fingerabdrücke.
Für eine automatische Beurteilung des Kurvenverlaufes wird dieser durch mathematisch einfach zu bestimmende Merkmale beschrieben. Es sind dies:

Arithmetischer Mittelwert der Grauwerte Ia

Minimaler Grauwert (dunkelster Bildpunkt) Imin

Maximaler Grauwert (hellster Bildpunkt) Imax

Wert des unteren Maximums (Anzahl der Grauwerte der Papillarlinien) Nmax1

Wert des oberen Maximums (Anzahl der Grauwerte der Zwischenräume) Nmax2

Gewerbliche Anwendbarkeit:

Bei einem Fingerabdruckbild, das mit einem Siemens Fingertip-CMOS-Sensor mit einer Auflösung von 256x256 und einer 8 bit-Dynamik (256 verschiedene Graustufen) aufgenommen wurde, wird davon ausgegangen, dass die Werte wie folgt aussehen:

Arithmetischer Mittelwert der Grauwerte Ia = 60 bis 105

10 Minimaler Grauwert Imin = 40 bis 65

Maximaler Grauwert Imax = 90 bis 150

Unteres Maximum Nmaxl- 500 bis 25000 Werte

Oberes Maximum Nmax2 = 500 bis 16000 Werte

Durch Überprüfung, ob die Merkmale eines erfassten Bildes innerhalb der vorgegebenen Bereiche liegen, wird nun auf einfache Weise festgestellt, ob ein Fingerabdruck vorliegt. Durch Aufnahmefehler kann es allerdings vorkommen, dass einzelne Merkmale in untypischer Weise von den Durchschnittswerten abweichen. Um diese Aufnahmen nicht von vornherein auszuschließen, wird davon ausgegangen, dass ein Fingerabdruckbild auch dann vorliegt, wenn nur 4 der 5 Merkmale innerhalb des vorgegebenen Bereiches liegen.
Eine Ausweitung dieser Methode ist etwa in der Weise vorstellbar, dass zu jedem Merkmal ein Qualitätsmaß der Übereinstimmung und daraus eine Gesamtqualitätszahl der Übereinstimmung ermittelt wird, die als Grundlage für die Einordnung des Bildes dient.

## Patentansprüche

1. Verfahren zur automatischen Triggerung von Mustererkennungsaufgaben, wobei das zu erkennende Muster einen Fingerandruck darstellt, **dadurch gekennzeichnet, dass** periodisch wiederkehrend aus der vorliegenden Bildinformation ein Histogramm der Häufigkeitsverteilung der Grauwerte des Bildes ermittelt wird, dass die Charakteristika (Ia, Imin, Imax, Nmax1, Nmax2) des Histogramms ermittelt werden und auf der Grundlage der Charakteristika festgestellt wird, ob ein relevantes Muster vorliegt und wenn dies der Fall ist, der Erkennungsvorgang angestoßen wird.

2. Verfahren nach Anspruch 1, **dadurch gekennzeichnet, dass** als Charakteristika des Histogramms der arithmetische Mittelwert der Grauwerte (Ia), der minimale Grauwert (Imin), der maximale Grauwert (Imax), der Wert des unteren Maximums (Nmax1) und der Wert des oberen Maximums (Nmax2) herangezogen werden.

## Claims

1. Method for automatic triggering of pattern recognition tasks wherein the pattern to be detected represents a finger print, **characterised in that** a periodically recurring frequency distribution histogram of grey tones is determined from available image data, that the characteristics (Ia, Imin, Imax, Nmax1, Nmax2) of the histogram are determined. Said characteristics are used to establish whether a relevant pattern is present, and if this is the case, whether the recognition process has been triggered.

2. Method according to Claim 1, **characterised in that** the arithmetic average of the grey tones (Ia), the minimal grey value (Imin), the maximum grey value (Imax), the value of the lower maximum (Nmax1) and the value of the upper maximum (Nmax2) function as the characteristics of the histogram.

## Revendications

1. Procédé pour le déclenchement automatique de tâches de reconnaissance de motifs, le motif à reconnaître représentant une empreinte digitale, **caractérisé en ce que** un histogramme de la répartition de fréquence des valeurs de gris de l'image est déterminé de façon périodique et récurrente à partir de la présente information d'image, **en ce que** les caractéristiques (Ia, Imin, Imax, Nmax1, Nmax2) de l'histogramme sont déterminées et on détermine sur la base des caractéristiques si on a un motif important et si c'est le cas, l'opération de reconnaissance est déclenchée.

2. Procédé selon la revendication 1, **caractérisé en ce qu'**on a recours comme caractéristiques de l'histogramme à la valeur moyenne arithmétique des valeurs de gris (la), à la valeur de gris minimale (Imin), à la valeur de gris maximale (Imax), à la valeur du maximum inférieur (Nmax1) et à la valeur du maximum supérieur (Nmax2).